# EUROPÄISCHE PATENTANMELDUNG

(11) **EP 0 782 949 A2**
(43) Veröffentlichungstag der Anmeldung: **09.07.1997**
(21) Anmeldenummer: 97200006.1
(22) Anmeldetag: 02.01.1997
(51) Int. Cl.: B62C 3/02, B62D 13/02

(54) **Kutsche mit einer lenkbaren Achse**

(30) Priorität: 05.01.1996 NL 1002031
(71) Anmelder: de Laat, Petrus Anthonius Andreus, 5531 RX Bladel (NL)
(72) Erfinder: de Laat, Petrus Anthonius Andreus, 5531 RX Bladel (NL)
(74) Vertreter: Brookhuis, Hendrik Jan Arnold

(57) **Zusammenfassung**

Von einem oder mehreren Tieren, insbesondere Pferden, zu ziehende Kutsche, umfassend einen Kutschenrahmen (2) mit einem Platz für einen Kutscher, ein vorderes Drehgestell (3) mit Vorderrädern, welches vordere Drehgestell schwenkbar an dem Kutschenrahmen befestigd ist, eine nach vorne herausragende Deichsel (5), die mit dem zumindestens einen Tier koppelbar und zu dem Kutschenrahmen schwenkbar ist, wobei ein Untersetzungsgetriebe (8-18) vorgesehen ist, das eine Schwenkbewegung der Deichsel in eine kleinere Schwenkbewegung des vorderen Drehgestells umsetzt.

Weiter sind Kupplungsmittel (20) vorgesehen, die es ermöglichen, daß in ihrem ersten Zustand eine Schwenkbewegung der Deichsel über das Untersetzungsgetriebe in eine kleinere Schwenkbewegung des vorderen Drehgestells umgesetzt wird, und daß in ihrem zweiten Zustand eine Schwenkbewegung der Deichsel in eine im wesentliche ebensogroße Schwenk bewegung des vorderen Drehgestells umgesetzt wird.

## Beschreibung

Die vorliegende Erfinding bezieht sich auf eine von einem oder mehreren Tieren, insbesondere Pferden, zu ziehende Kutsche, die von einem sich hierauf befindenden Kutscher gelenkt wird.

In der europäischen Patentanmeldung EP 0 468 086 werden Kutschen beschrieben, die mit einer Zug- und Lenkdeichsel versehen sind, die starr mit dem vorderen Drehgestell der Kutsche gekuppelt ist. Hierdurch wird durch eine Änderung der Laufrichtung der Tiere die Deichsel, und damit in gleichem Maße das Drehgestell an der Vorderseite der Kutsche, verschwenkt. In der EP 0 468 086 wird weiter eine Kutsche mit einem Untersetzungsgetriebe zwischen der Deichsel und dem vorderen Drehgestell beschrieben, so daß eine Schwenkbewegung der Deichsel zu einer kleineren Schwenkbewegung des vorderen Drehgestells führt.

Aus FR 2 639 895 ist eine Kutsche mit Hinterrädern, die jeweils um eine eigene Achse schwenkbar sind, bekannt, so daß bei Kurvenfahrt mit der Kutsche, die Hinterräder mit der Schwenkbewegung des vorderen Drehgestells der Kutsche mitlenken können. Hierzu ist ein System mit hydraulischen Zylindern vorgesehen, das eine Schwenkbewegung des Drehgestells an der Vorderseite in eine Schwenkbewegung jedes einzelnen Hinterrades umsetzt.

Der vorliegenden Erfindung liegt die Aufgabe zugrunde, eine Kutsche mit besseren Fahreigenschaften und einer größeren Stabilität als die bisher bekannten Kutschen zu schaffen.

Diese Aufgabe wird nach einem ersten Aspekt der vorliegenden Erfindung durch eine Kutsche nach dem Oberbegriff des Anspruchs 1 erreicht, welcher Oberbegriff der EP 0 468 086 zugrunde liegt, welche Kutsche dadurch gekennzeichnet ist, daß Kupplungsmittel vorgesehen sind, die es ermöglichen, daß in ihrem ersten Zustand eine Schwenkbewegung der Deichsel über das Untersetzungsgetriebe in eine kleinere Schwenkbewegung des vorderen Drehgestells umgesetzt wird, und daß in ihrem zweiten Zustand eine Schwenkbewegung der Deichsel in eine im wesentlichen ebensogroße Schwenkbewegung des vorderen Drehgestells umgesetzt wird.

Diese erfindungsgemäße Maßnahme liegt der Gedanke zugrunde, daß die Wirkung des Untersetzungsgetriebes bei dem, insbesondere mit hoher Geschwindigkeit, Geradeausfahren der Kutsche ungünstig für die Richtungsstabilität der Kutsche ist. Besonders kann bei einem eingeschalteten Untersetzungsgetriebe ein unerwünschstes und unkontrollierbares Schleudern der Kutsche beobachtet werden, wenn die Kutsche mit hoher Geschwindigkeit aus einer Kurve kommt und anschließend geradeaus fahren wird. Mit Hilfe der erfindungsgemäßen Kupplungsmittel kann die Wirkung des Untersetzungsgetriebes eingeschaltet werden, zum Beispiel wenn eine enge Kurve genommen werden muß, oder eben ausgeschaltet werden, besonders wenn schnell geradeaus gefahren werden muß.

Vorzugsweise sind die Kupplungsmittel ausgelegt um selbstständig, also ohne Eingreifen des Kutschers, in ihren zweiten Zustand einzutreten, wenn die Deichsel zumindestens etwa ihren Geradeausstand einnimmt, wodurch das Untersetzungsgetriebe demnach automatisch ausgeschaltet wird, wenn die Kutsche aus einer Kurve kommt und in gerader Linie weiterfährt. Weiter wird bevorzugt, daß die Kupplungsmittel ein Bedienungsorgan umfassen, mit dem der Kutscher die Kupplungsmittel in ihren ersten Zustand bringen kann, so daß das Untersetzungsgetriebe, zum Beispiel wenn eine Kurve erreicht wird, durch eine Kupplungshandlung des Lenkers in Betrieb gesetzt werden kann.

Die Stabilität der Kutsche wird dadurch weiter erhöht, daß die Kutsche mit, zu ihrem Geradeausstand schwenkbaren Hinterrädern versehen wird, wobei Übertragungsmittel, die eine Schwenkbewegung des vorderen Drehgestells in eine Schwenkbewegung der Hinterräder umsetzen, vorgesehen sind. Bemerkt wird, daß ein solches "Mitlenken" der Hinterräder einer Kutsche an und für sich bereits aus FR 2 639 895 bekannt ist.

Vorzugsweise sind diese Übertragungsmittel in solcher Weise ausgelegt, daß eine Schwenkbewegung des vorderen Drehgestells nur in eine Schwenkbewegung der Hinterräder ungesetzt wird, wenn die Kupplungsmittel der Kutsche sich in ihrem ersten Zustand befinden, also wenn das Untersetzungsgetriebe zwischen der Deichsel und dem Drehgestell an der Vorderseite der Kutsche eingeschaltet ist.

Weiter wird bevorzugt, daß die Hinterräder in dem zweiten Zustand der Kupplungsmittel in ihrem Geradeausstand fixiert sind.

In einer besonders vorteilhaften Ausgestaltung sind die Übertragungsmittel zwischen Drehgestell an der Vorderseite der Kutsche und den Hinterrädern in solcher Weise ausgelegt, daß diese bei einer Schwenkbewegung des vorderen Drehgestells zwischen dem Geradeausstand und einer bestimmten Winkellage, die Hinterräder eine Schwenkbewegung im wesentlichen entsprechend der von der Kutsche zu nehmenden Kurve ausführen lassen, und bei einer, an der bestimmten Winkellage vorbei, fortschreitenden Schwenkbewegung des vorderen Drehgestells, die Hinterräder eine Schwenkbewegung in Richtung auf ihren Geradeausstand ausführen lassen. Dadurch, daß bei einem relativ großen Schwenkwinkel des vorderen Drehgestells die Hinterräder wieder mehr oder weniger in ihren Geradeausstand gebracht werden, wird das Risiko des Kippens der Kutsche während der Kurvenfahrt erheblich reduziert, besonders im Vergleich zu der aus FR 2 639 895 bekannten Kutsche.

Die Stabilität der Kutsche kann weiter durch die Deichsel erhöht werden, indem die Deichsel zum Ankoppeln eines neben der Deichsel herlaufenden Tieres mit einem sich in Richtung auf das Tier erstreckenden und im wesentlichen starren Zwischenstück, das nach vorne und nach hinten schwenkbar mit der Deichsel verbunden ist, versehen wird, wobei die Schwenkbewegung des Zwischenstücks in Richtung auf die Kutsche durch einen Anschlag begrenzt ist. Bisher wurde zum Ankoppeln eines Tieres an die Deichsel ein Stück Kette verwendet. Durch die Anwendung einer Kette kann die Deichsel innerhalb eines relativ großen Bereiches frei hin und her schwenken. Diese Schwenkbewegung der Deichsel führt zu einem Schleudern der Kutsche. Dadurch, daß die Kette nun durch ein im wesentlichen starres Zwischenstück ersetzt wird, kann die Deichsel in erheblich geringerem Maße schwenken.

Es wird deutlich sein, daß obengenannte Maßnahmen auch einzeln zu besseren Fahreigenschaften und einer größeren Stabilität von Kutschen beitragen. Aus diesem Grunde sind die unabhängigen Ansprüche 10 und 11 aufgenommen worden.

Die Erfindung wird nachstehend anhand der Zeichnung näher erläutert werden. Es zeigt:
- Figur 1: schematisch ein perspektivisches Ausführungsbeispiel der erfindungsgemäßen Kutsche,
- Figuren 2a-c: eine schematische Draufsicht auf drei Positionen der in Fig. 1 gezeigten Kutsche,
- Figur 3: schematisch einen Ausschnitt der Deichsel der erfindungsgemäßen Kutsche.

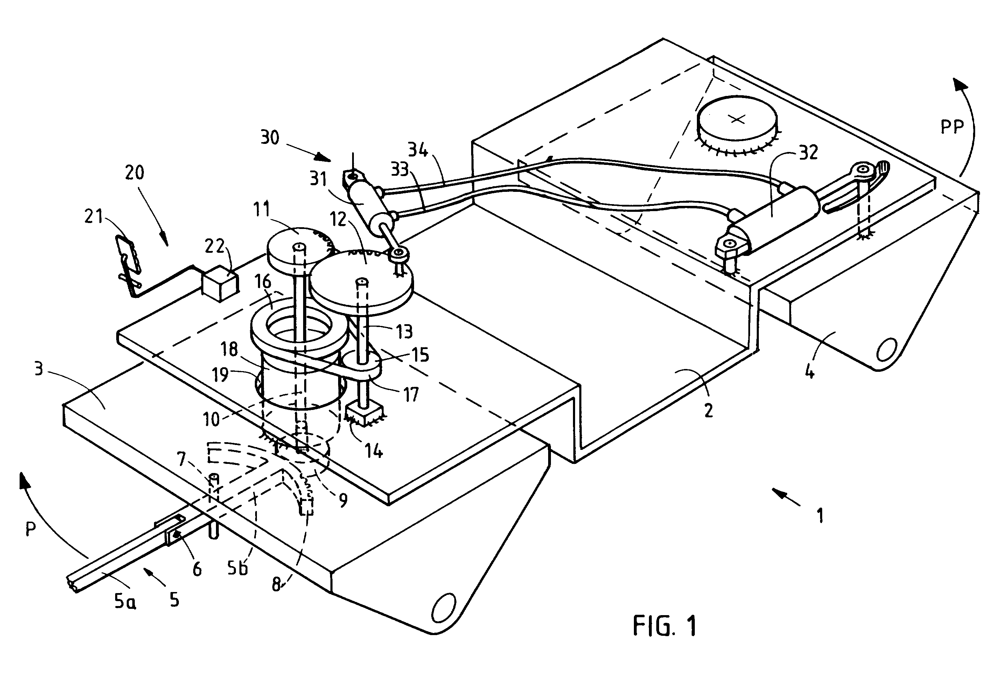

Die in Figur 1 gezeigte Kutsche 1 umfaßt einen Kutschenrahmen 2 mit einem Sitzplatz für einen Kutscher. Der Kutschenrahmen 2 wird von einem vorderen Drehgestell 3 und einem hinteren Drehgestell 4, die jeweils mittels eines Drehkranzes mit dem Kutschenrahmen 2 verbunden sind, unterstützt. Der Einfachheit halber sind die zugehörigen Räder in Figur 1 weggelassen und nur die Radnaben schematisch angedeutet.

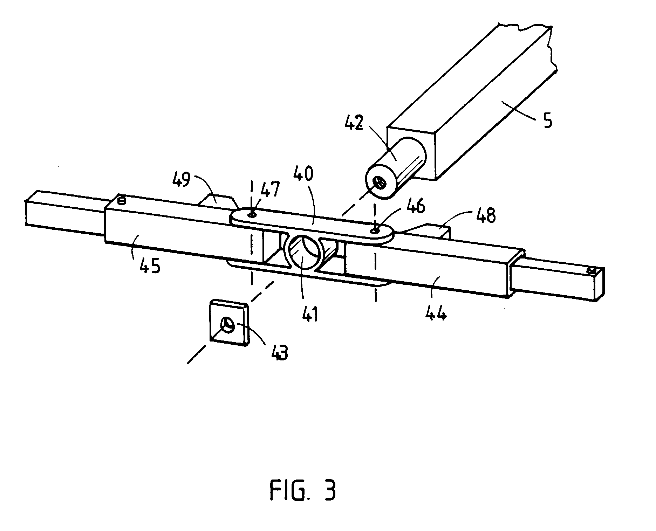

Die Kutsche 1 ist dazu vorgesehen, von einem oder mehreren Tieren gezogen zu werden, insbesondere von zwei Pferden. Hierzu werden die Pferde an das vordere Drehgestell und an die Deichsel 5 gekoppelt, vorzugsweise mit der anhand von Figur 3 zu beschreibenden Kupplung. Die Deichsel 5 besteht aus zwei Teilen, beziehungsweise 5a und 5b, die über einen waagerechten Gelenkstift 6 miteinander verbunden sind. Das Deichselteil 5b ist in einem Abstand von der Drehachse des vorderen Drehgestells 3 über einen senkrechten Gelenkstift 7 in der Horizontalebene schwenkbar mit dem vorderen Drehgestell 3 verbunden.

Die Kutsche 1 ist mit einem Untersetzungsgetriebe versehen, das es ermöglicht, daß eine Schwenkbewegung der Deichsel 5 zu ihrem Geradeausstand zu einer Schwenkbewegung des vorderen Drehgestells 3 in die gleiche Richtung als die Deichsel 5 führt, jedoch über einen kleineren Schwenkwinkel.
Bei dem Untersetzungsgetriebe ist das Übersetzungsverhältnis über den gesamten Schwenkbereich der Deichsel 5 konstant. Es wird bevorzugt, daß das Übersetzungsverhältnis etwa 2 : 1 ist, das heißt, daß eine Schwenkung der Deichsel 5 über einen Winkel van 45° zu ihrem Geradeausstand zu einer Schwenkung des vorderen Gestells 3 über einen Winkel von etwa 22° führt. Hierdurch bleibt die Kutsche bei Kurvenfahrt gut in der Spur der Pferde und können enge Kurven genommen werden.

Das Untersetzungsgetriebe umfaßt eine Zahnstange 8, die an dem auf die Drehachse des vorderen Drehgestells 3 ausgerichtete Ende des Deichselteils 5b angeordnet ist. Die Verzahnung der Zahnstange 8 liegt auf einem Kreisbogen, dessen Krümmemittelpunkt im wesentlichen zusammenfällt mit dem Gelenkstift 7. Die Verzahnung der Zahnstange 8 erstreckt sich zu der Achse der Deichsel 5 über etwa 50° in Richtung auf jede Seite.

Die Zahnstange 8 ist in Eingriff mit einem Zahnrad 9, das fest auf einer Vertikalachse 10 befestigt ist. Die Achse 10 ist zu dem Kutschenrahmen 2 und dem vorderen Drehgestell 3 drehbar gelagert und fällt hinsichtlich des Kutschenrahmens 2 mit der Drehachse des vorderen Drehgestells 3 zusammen.
Auf der Achse 10 ist zugleich ein Zahnrad 11 fest befestigt. Das Zahnrad 11 ist in Eingriff mit einem nächsten Zahnrad 12, das seinerseits fest an einer Vertikalachse 13 angeordnet ist. Die Achse 13 ist mittels eines an dem Kutschenrahmen 2 angeordneten Lagerblocks 14 drehbar gelagert. Auf der Achse 13 ist weiter ein Kettenrad 15 fest angeordnet.

Weiter umfaßt das Untersetzungsgetriebe ein ringförmiges Kettenrad 16. Dieses Kettenrad 16 ist in solcher Weise in dem Kutschenrahmen 2 gelagert, daß die Drehachse des Kettenrads 16 mit der Drehachse des vorderen Drehgestells 3 zusammenfällt. Um das Kettenrad 15 und das Kettenrad 16 liegt eine Kette 17.

An dem vorderen Drehgestell 3 ist eine emporragende zylindrische Buchse 18 fest befestigt. Die Buchse 18 steckt durch eine Öffnung 19 in dem Kutschenrahmen 2 und endet unter dem Kettenrad 16.

Die Kutsche 1 ist mit Kupplungsmitteln 20 versehen, die in solcher Weise ausgeführt sind, daß in ihrem ersten Zustand das Kettenrad 16 mit der zylindrischen Buchse 18, und demnach mit dem vorderen Drehstell 3, verbunden ist, und in ihrem zweiten Zustand das Kettenrad 16 mit einem festen Punkt des Kutschenrahmens 2 verbunden ist, wodurch das Kettenrad 16 nicht mehr drehen kann.

In dem ersten Zustand der Kupplungsmittel 20 ist das obenbeschriebene Untersetzungsgetriebe eingeschaltet und dies überträgt eine Schwenkbewegung der Deichsel 5 in reduziertem Maße auf das vordere Drehgestell 3.

In dem zweiten Zustand der Kupplungsmittel 20 ist das Untersetzungsgetriebe ausgeschaltet und folgt das vordere Drehgestell 3 im Grunde ohne Untersetzung den Schwenkbewegungen der Deichsel 5.

Die Kupplungsmittel 20 umfassen in diesem Beispiel ein Pedal 21, das an dem Kutschenrahmen 2 angeordnet ist und von dem Kutscher bedient werden kann. Das Pedal steht mit einer in Figur 1 schematisch angedeuteten Kupplungseinrichtung 22 in Verbindung, die die obengenannten Kupplungszustände bewerkstelligen kann.

Vorzugsweise ist die Kupplungseinrichtung 22 in solcher Weise ausgeführt, daß diese selbsttätig, also ohne Einsatz des Kutschers, das Kettenrad 16 hinsichtlich des Kutschenrahmens 2 sichert und hinsichtlich der Buchse auskuppelt, in dem Moment, wo mit der Kutsche 1 etwa geradeausgefahren wird. Hierdurch schaltet das Untersetzungsgetriebe also von selbst aus, wenn die Kutsche 1 aus einer Kurve kommt und dann geradeaus fahren wird.

Die Kupplungseinrichtung 22 ist dann weiter vorzugsweise in solcher Weise ausgeführt, daß, wenn der Kutscher das Pedal 21 betätigt, das Kettenrad 16 wieder drehbar zu dem Kutschenrahmen 2 wird und mit der Buchse 18, und demnach mit dem vorderen Drehgestell 3 koppelt. Das Untersetzungsgetriebe ist dann eingeschaltet.

Vorzugsweise ist die Kupplungseinrichtung 22 in solcher Weise ausgeführt, daß der Kutscher zu jeder Zeit das Bedienungsorgan bedienen kann, also hier das Pedal 21 betätigen kann, um so die Kupplungseinrichtung zu beauftragen, das Untersetzungsgetriebe einzuschalten, aber daß das tatsächliche Einschalten des Untersetzungsgetriebes nur stattfindet, wenn die Deichsel 5 etwa ihren Geradeausstand einnimmt.

Statt eines Pedals 21 würde zum Beispiel auch ein Handhebel vorgesehen sein können.

Die Kutsche 1 ist weiter mit Übertragungsmitteln 30 versehen, die bewerkstelligen, daß eine Schwenkbewegung des vorderen Drehgestells 3 zu einer Schwenkbewegung des hinteren Drehgestells 4 führt. Die Übertragungsmittel 30 umfassen in diesem Beispiel einen ersten hydraulischen Zylinder 31, dessen Kolbenstange um eine Vertikalachse drehbar mit einem geeigneten festen Punkt des Zahnrads 12 verbunden ist, und dessen Zylinderkörper um eine Vertikalachse drehbar mit dem Kutschenrahmen 2 verbunden ist. Weiter umfassen die Übertragungsmittel 30 einen zweiten hydraulischen Zylinder 32, dessen Kolbenstange um eine Vertikale drehbar mit einem festen Punkt des hinteren Drehgestells 4 verbunden ist, und dessen Zylinderkörper drehbar um eine Vertikalachse mit dem Kutschenrahmen 2 verbunden ist. Die Anschlusse des Zylinders 31 und 32 sind über hydraulische Leitungen 33 und 34 verbunden.

Es wird deutlich sein, daß die obenbeschriebenen Übertragungsmittel 30 nur dann funktionieren, wenn das Untersetzungsgetriebe eingeschaltet ist. Wenn das ja nicht der Fall ist, wird das Zahnrad 12 in dem Stand, der zu dem Geradeausfahren der Kutsche 1 gehört, festgehalten. Das hintere Drehgestell 4 ist dann in dem Geradeausstand fixiert.

Wenn das Untersetzungsgetriebe eingeschaltet ist, sind die Übertragungsmittel 30 in der nachfolgend beschriebenen Weise inganggesetzt.

Bei dem aus ihrem Geradeausstand Schwenken der Deichsel 5 hinsichtlich des Kutschenrahmens 2, zum Beispiel in Richtung auf Pfeil P, wird das Zahnrad 12 aus dem in Figur 1 gezeigten Stand im Uhrzeigersinn drehen, so daß die Kolbenstange des Zylinders 31 ausgezogen wird. Hierdurch wird das hydraulische Öl durch die Leitung in den Zylinder 32 gepreßt, wodurch seine Kolbenstange nach außen schiebt, und das hintere Drehgestell in Richtung auf den Pfeil PP schwenkt.

Bei einem bestimmten Schwenkwinkel der Deichsel 5 zu ihrem Geradeausstand ist die Kolbenstange des Zylinders 31 maximal ausgezogen. Wenn die Deichsel 5 noch weiter in Richtung auf den Pfeil P schwenkt, wird die Kolbenstange des Zylinders 31 wieder nach innen gedrückt werden. Dies hat zur wichtigen Folge, daß das hintere Drehgestell 4 dann nicht eine noch größere Winkellage einnehmen wird, sondern eben wieder allmählich zu seinem Geradeausstand zurückkehrt. Hierdurch stehen bei einem maximalen Schwenkwinkel des vorderen Drehgestells 3 die Hinterräder wieder im wesentlichen geradeaus. Dies ergibt eine wesentliche Verbesserung der Stabilität der Kutsche 1 bei einer engen Kurvenfahrt. Weiter wird hierdurch eine kurze Distanz zwischen den Drehgestellen möglich, ohne das Risiko, daß bei einer engen Kurvenfahrt ein Vorder- und ein Hinterrad miteinander in Berührung kommen.

Durch eine geeignete Wahl des Übersetzungsverhältnisses zwischen der Schwenkung der Deichsel 5 und der Rotation des Zanrads 12 und einer geeigneten Lage des Angriffspunktes der Kolbenstange des Zylinders 31 an dem Zahnrad 12, kann der Schwenkwinkel der Deichsel 5, bei dessen Überschreitung das hintere Drehgestell 4 wieder in seinen Geradeausstand zurückschwenkt, eingestellt werden. Dieser Schwenkwinkel liegt vorzugsweise in dem Bereich zwischen 30° und 60°, besonders bevorzugt bei 45°.

Es wird deutlich sein, daß die Maßnahme, die mitlenkenden Hinterräder ab einem bestimmten Schwenkwinkel der Deichsel wieder allmählich in ihren Gereadeausstand bewegen zu lassen, auch vorteilhaft bei einer Kutsche mit einzeln gelenkten Hinterrädern ist, wie beschrieben in FR 2 639 895.

Weiter ist deutlich, daß die Übertragungsmittel zum Lenken der Hinterräder auch in einer anderen Weise, zum Beispiel mechanisch oder elektrisch ausgeführt sein können.

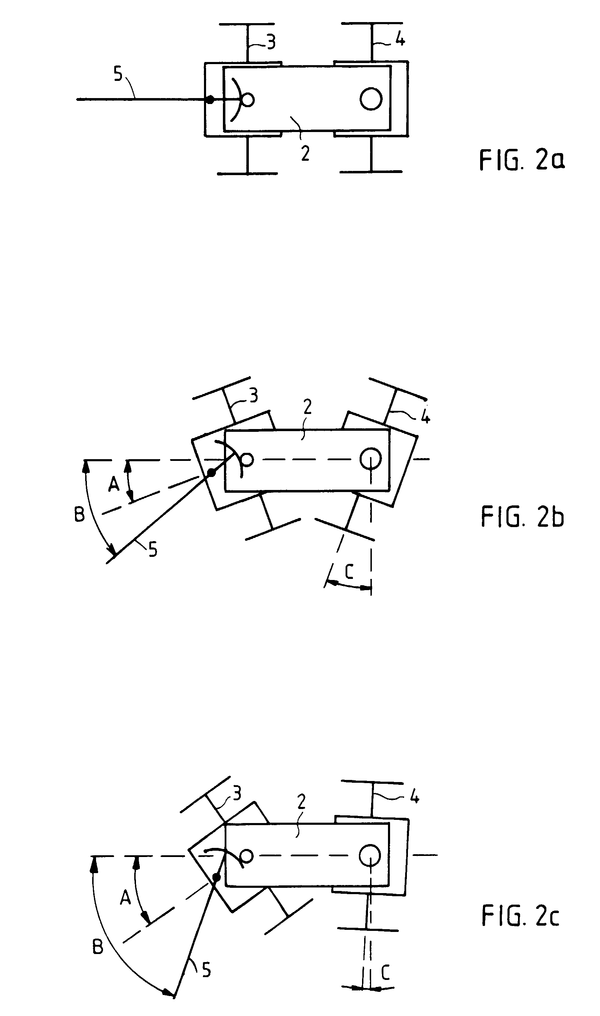

Die Figuren 2a, 2b und 2c stellen nochmals deutlich dar, in welcher Weise das vordere Drehgestell 3 und das hintere Drehgestell 4 der Kutsche 1 auf das Schwenken der Deichsel 5 reagieren, wenn das Untersetzungsgetriebe in Wirkung ist.

In Figur 2a ist die Kutsche 1 in ihrem Geradeausstand gezeigt. Wenn der Kutscher die Pferde nach links führt, wird die Deichsel 5 von den Pferden geschwenkt werden, zum Beispeil in den Stand in Figur 2b. Wenn der Kutscher das Untersetzungsgetriebe eingeschaltet hat, so wird das vordere Drehgestell 3 zu der Längsachse des Kutschenrahmens 2 einen Winkel A machen, der die Hälfte des Winkels B zwischen der Deichsel 5 und der Längsachse des Kutschenrahmens 2 beträgt. Durch die Wirkung der Übertragungsmittel 30 (sieh Figur 1) wird das hintere Drehgestell 4 mitlenken und über Winkel C schwenken.

Wenn der Kutscher die Pferde eine noch engere Kurvenfahrt machen läßt, wird der Deichselwinkel B noch größer werden, wodurch auch der Winkel A größer wird, jedoch noch immer die Hälfte des Winkels B ist, was in Figur 2c gezeigt ist. Wenn der Winkel B bei dieser Schwenkbewegung einen bestimmten Wert überschreitet, bewerkstelligen die Übertragungsmittel 30, daß das hintere Drehgestell 4 wieder in Richtung auf seinen Geradeausstand zurückschwenkt. Dies ist durch die Untersetzung des Winkels C zu Figur 2b zu erkennen.

In Figur 3 ist schließlich das nach vorne herausragende Ende der Deichsel 5 gezeigt. Zum Ankoppeln von zwei Pferden an beide Seiten der Deichsel 5 ist eine besondere Einrichtung vorhanden. Diese Einrichtung besteht aus einem Befestigungsstück 40 mit einer Bohrung 41, in der ein an der Deichsel 5 angeordneter Stutzen 42 paßt. Wenn das Befestigungsstück 40 auf den Stutzen 42 aufgesetzt ist, kann dieser mit einer Abdeckplatte 43 und einem Bolzen frei drehbar um die Längsachse der Deichsel 5 festgesetzt werden. Das Befestigungsstück 40 hat nach links und rechts jeweils zwei im Abstand voneinander liegenden Laschen, zwischen denen jeweils ein Ende eines starren Zwischenstücks, bzw. 44 und 45 angeordnet ist. Durch eine Bolzenverbindung, bzw. 46, 47, ist jedes Zwischenstück 44, 45 hinsichtlich der Deichsel 5 nach vorne und nach hinten schwenkbar.

Jedes Zwischenstück besteht aus zwei Gehäuseprofilen, wobei das eine teleskopisch in dem anderen steckt und in unterschiedlichen Positionen zum Einstellen der Länge des Zwischenstücks festgesetzt werden kann. Jedes Zwischenstück 44, 45 is mit einem Anschlag 47, 48 versehen, der die Schwenkbewegung des betreffenden Zwischenstücks nach hinten, das heißt in Richtung auf die Kutsche, begrenzt. Hierdurch wird vorgebeugt, daß das Pferd von hinten von der Kutsche berührt werden kann. Jedes Zwischenstück kann mit einer Befestigung zum Ankoppeln des Zwischenstücks an das Pferd versehen sein. Dies ist nicht in Figur 3 dargestellt.

## Patentansprüche

1. Von einem oder mehreren Tieren, insbesondere Pferden, zu ziehende Kutsche (1), umfassend einen Kutschenrahmen (2) mit einem Platz für einen Kutscher, ein vorderes Drehgestell (3) mit Vorderrädern, welches vordere Drehgestell schwenkbar an dem Kutschenrahmen befestigt ist, eine nach vorne herausragende Deichsel (5), die mit dem zumindestens einen Tier koppelbar und zu dem Kuschenrahmen schwenkbar ist, und ein Untersetzungsgetriebe, das eine Schwenkbewegung der Deichsel in eine kleinere Schwenkbewegung des vorderen Drehgestells umsetzt, **dadurch gekennzeichnet,** daß Kupplungsmittel (20) vorgesehen sind, die es ermöglichen, daß in ihrem ersten Zustand eine Schwenkbewegung der Deichsel (5) über das Untersetzungsgetriebe in eine kleinere Schwenkbewegung des vorderen Drehgestells (3) umgesetzt wird, und daß in ihrem zweiten Zustand eine Schwenkbewegung der Deichsel in eine im wesentlichen ebensogroße Schwenkbewegung des vorderen Drehgestells umgesetzt wird.

2. Kutsche nach Anspruch 1, bei der die Kupplungsmittel (20) ausgelegt sind, um selbsttätig in ihren zweiten Zustand einzutreten, wenn die Deichsel zumindestens etwa ihren Geradeausstand einnimmt, und bei der die Kupplungsmittel ein Bedienungsorgan (21) umfassen, mit dem der Kutscher die Kupplungsmittel in ihren ersten Zustand bringen kann.

3. Kutsche nach Anspruch 1 oder 2, wobei die Kutsche mit zu ihren Geradeausstand schwenkbaren Hinterrädern (4) versehen ist, wobei Übertragungsmittel (30) vorgesehen sind, die eine Schwenkbewegung des vorderen Drehgestells (3) in eine Schwenkbewegung der Hinterräder umsetzen.

4. Kutsche nach Anspruch 3, bei der die Übertragungsmittel (30) in solcher Weise ausgelegt sind, daß eine Schwenkbewegung des vorderen Drehgestells (3) nur in eine Schwenkbewegung der Hinterräder (4) umgesetzt wird, wenn die Kupplungsmittel (20) der Kutsche sich in ihrem ersten Zustand befinden.

5. Kutsche nach Anspruch 3 oder 4, bei der die Hinterräder in dem zweiten Zustand der Kupplungsmittel (20) in ihrem Geradeausstand fixiert sind.

6. Kutsche nach einem oder mehreren der Ansprüche 3 - 5, bei der die Übertragungsmittel (30) in solcher Weise ausgelegt sind, daß diese bei einer Schwenkbewegung des Drehgestells (3) an der Vorderseite zwischen dem Geradeausstand und einer bestimmten Winkellage die Hinterräder (4) eine Schwenkbewegung im wesentlichen entsprechend der von der Kutsche zu nehmenden Kurve ausführen lassen, und bei einer, an dieser bestimmten Winkellage vorbei, fortschreitenden Schwenkbewegung des vorderen Drehgestells die Hinterräder eine Schwenkbewegung in Richtung auf ihren Geradeausstand ausführen lassen.

7. Kutsche nach einem oder mehreren der Ansprüche 3 - 6, wobei die Kutsche ein hinteres Drehgestell (4) hat, das die Hinterräder trägt.

8. Kutsche nach einem oder mehreren der vorgehenden Ansprüche, bei der die Deichsel (5) zum Ankoppeln eines neben der Deichsel herlaufenden Tieres mit einem sich in Richtung auf das Tier erstreckenden und im wesentlichen starren Zwischenstück (44, 45) nach vorne und nach hinten schwenkbar mit der Deichsel verbunden ist, wobei die Schwenkbewegung des Zwischenstücks in Richtung auf die Kutsche durch einen Anschlag (47, 48) begrenzt ist.

9. Kutsche nach Anspruch 8, daß zwei Zwischenstücke (44, 45) gegenübereinander an beiden Seiten der Deichsel (5) vorgesehen sind, wobei beide Zwischenstücke jeweils nach vorne und nach hinten schwenkbar mit einem gemeinsamen Befestigungsstück (40) verbunden sind, das seinerseits um die Längsachse der Deichsel drehbar mit der Deichsel verbunden ist.

10. Von einem oder mehreren Tieren, insbesondere Pferden, zu ziehende Kutsche, umfassend einen Kutschenrahmen, ein vorderes Drehgestell mit Vorderrädern, welches vordere Drehgestell schwenkbar an dem Kutschenrahmen befestigt ist, eine nach vorne herausragende Deichsel, die mit dem zumindestens einen Tier koppelbar und zu dem Kutschenrahmen schwenkbar ist, und zu ihren Geradeausstand schwenkbaren Hinterräder, wobei Übertragungsmittel vorgesehen sind, die eine Schwenkbewegung des vorderen Drehgestells in eine Schwenkbewegung der Hinterräder umsetzen, **dadurch gekennzeichnet,** daß die Übertragungsmittel in solcher Weise ausgelegt sind, daß diese bei einer Schwenkbewegung des vorderen Drehgestells zwischen dem Geradeausstand und einer bestimmten Winkellage, die Hinterräder eine Schwenkbewegung im wesentlichen entsprechend der von der Kutsche zu nehmenden Kurve ausführen lassen, und bei einer, an dieser bestimmten Winkellage vorbei, fortschreitenden Schwenkbewegung des vorderen Drehgestells die Hinterräder eine Schwenkbewegung in Richtung auf ihren Geradeausstand ausführen lassen.

11. Von einem oder mehreren Tieren, insbesondere Pferden, zu ziehende Kutsche, umfassend einen Kutschenrahmen mit einem Platz für einen Kutscher, ein vorderes Drehgestell mit Vorderrädern, welches vordere Drehgestell schwenkbar an dem Kutschenrahmen befestigt ist, eine nach vorne herausragende Deichsel, die mit dem zumindesten einen Tier ankoppelbar und zu dem Kutschenrahmen schwenkbar ist, **dadurch gekennzeichnet,** daß die Deichsel zum Ankoppeln eines neben der Deichsel herlaufenden Tieres mit einem sich in Richtung auf das Tier erstreckenden und im wesentlichen starren Zwischenstück versehen ist, welches Zwischenstück nach vorne und nach hinten schwenkbar mit der Deichsel verbunden ist, wobei die Schwenkbewegung des Zwischenstücks in Richtung auf die Kutsche durch einen Anschlag begrenzt ist.

12. Kutsche nach einem oder mehreren der vorgehenden Ansprüche, bei der das Untersetzungsgetriebe ein festes Übersetzungsverhältnis hat.

13. Deichsel für eine Kutsche nach Ansprüchen 8 oder 9.
